# EUROPEAN PATENT SPECIFICATION

(11) **EP 3 655 354 B1**
(45) Date of publication and mention of the grant of the patent: **07.06.2023**
(21) Application number: 18762402.8
(22) Date of filing: 04.07.2018
(51) Int. Cl.: B65G 59/04

(54) **MAGNETIC DEVICE, IN PARTICULAR A PLATE SEPARATOR FOR SEPARATING STEEL PLATES FROM A STACK**
MAGNETISCHE VORRICHTUNG, INSBESONDERE EIN PLATTENSEPARATOR ZUM TRENNEN VON STAHLPLATTEN VON EINEM STAPEL
DISPOSITIF MAGNÉTIQUE, EN PARTICULIER SÉPARATEUR DE PLAQUES POUR SÉPARER DES PLAQUES D'ACIER D'UNE PILE

(30) Priority: 17.07.2017 NL 2019263
(43) Date of publication of application: 27.05.2020
(73) Proprietor: Goudsmit Magnetic Systems B.V., 5582 HA Waalre (NL)
(72) Inventor: JACOBS, Ad, 5556VL Valkenswaard (NL); SCHMITZ, Bram, 5582HC Waalre (NL); VERBERNE, Paul, 5712LS Someren (NL)
(74) Representative: Verhees, Godefridus Josephus Maria
(86) International application number: PCT/NL2018/050436
(87) International publication number: WO 2019/017772

(56) References cited:
- US-B1- 6 481 706
- Anonymous: "Electromagnet - Wikipedia", , 30 November 2013 (2013-11-30), XP055373009, Retrieved from the Internet: URL:https://en.wikipedia.org/w/index.php?t itle=Electromagnet&oldid=583890383 [retrieved on 2017-05-15]

## Description

### Field of the invention

The invention relates to a magnetic plate separator for spacing the upper plates of a stack of steel plates in vertical direction, comprising:
- a housing provided with a work surface, as well as
- a magnet assembly of at least two permanent magnets which are movably present in the housing, and
- displacement means for moving the magnet assembly between an active state near the work surface and an inactive state remote from the work surface.

In an embodiment of the magnetic plate separator, the work surface is elongated and vertically oriented in longitudinal direction and, during operation the work surface is present next to a stack of steel plates. Also the magnets are then elongated and oriented vertically in longitudinal direction. In the active state of the magnet assembly, the magnetic field of the permanent magnets is operative to beyond the work surface and in the inactive state there is no active magnetic field present beyond the work surface.

Magnetic fields of plate separators are equipped with a monopole (north or south pole) or a dipole (north and south pole) over the full height of the stack of steel plates to be separated. The magnetic field is so powerful, with a deep field effect, that the steel plates are magnetically saturated over as large a surface as possible. Since like poles repel each other, the plates then spread in vertical direction and stand apart.

### Background of the invention

A magnetic plate separator according to the preamble of claim 1 is known from US 6 481 706 B1. The two permanent magnets of the magnet assembly of this known device are both fixed to one rotatable shaft. In the active state one of the magnets is facing the work surface with the magnetic North Pole and the other magnet is facing the work surface with the magnetic South Pole and the other poles of the magnets are interconnected via a magnetic conductor.

From NL 1031275 A a plate separator is known in which the permanent magnets having North and South poles are pulled away from the work surface, which takes much force. In addition, the permanent magnets in this known plate separator remain in the active state or they move to the active state in case the power supply (pressure, electricity to keep the permanent magnets away from the work surface) is lost as a result of a malfunction. For safety reasons, it is preferable for the permanent magnets to move to and/or remain in the inactive state when the power supply is lost.

### Summary of the invention

An object of the invention is to provide a magnetic plate separator in which the displacement of the magnets requires less force and wherein the magnets move to the inactive state or remain there in the event of the power supply being lost. To this end, a magnetic plate separator according to the invention is characterized in that a first magnet is fixed to a first shaft and a second magnet to a second shaft, which shafts are rotatable in mutually opposite directions, where in the active state the first magnet with the magnetic North pole faces the work surface and the second magnet with the magnetic South pole faces the work surface and the other poles of the magnets are magnetically connected to each other via at least one magnetic conductor, and where in the inactive state the North pole of the first magnet and the South pole of the second magnet are facing each other and the other poles of the magnets are magnetically connected to each other via the magnetic conductor, in that the magnetic conductor is arranged between the two permanent magnets, in that the magnetic conductor is formed by a solid cylinder of magnetic material and, during operation, is also vertically oriented and has a cross-section that is provided with a first end face facing the work surface and a second end face turned away from the work face and sides extending between the first and second end faces and extending along a part of a circular arc, in that the second end face turned away from the work surface is larger than the first end face facing the work surface, and in that the centres of the circular arcs coincide or substantially coincide with the axes of the shafts on which the first and second permanent magnets are fixed. Both in the active state and in the inactive state of the magnets the other poles of the magnets are thus present near the magnetic conductor which closes the magnetic circuit. In the magnetic plate separator according to the invention, the magnet system is split in two parts which can both rotate. One part near the work surface is poled North and the other part near the work surface is poled South. By turning the magnets with these poles towards the work surface, the magnet plate separator is in its ON state. When both magnets are turned away, these magnetic poles are short-circuited by the magnetic conductor and the magnetic plate separator ends up in its OFF state. The magnetic force on the steel plates to be separated is hereby reduced substantially to zero and the force to switch off the magnetic plate separator is much lower than is the case with the known magnet plate separators. An additional advantage is that if there are no steel plates lying in front of the work surface, the magnet assembly will switch itself off because the magnets will rotate to the state where the magnetic resistance is lowest and that is in the OFF state of the magnetic plate separator.

An embodiment of the magnetic plate separator according to the invention is characterized in that further magnetic conductors are fixed to said other poles of the permanent magnets, which further magnetic conductors, viewed in cross-section, extend in a direction towards each other. As a result, air gaps in the magnetic circuit are further reduced, resulting in a more powerful magnetic field.

A further embodiment of the magnetic plate separator according to the invention is characterized in that the permanent magnets are each coupled to a spring that exerts a force on the relevant magnet in the direction to the inactive state. As a result, when the supply voltage (in the case of pneumatically or hydraulically designed displacement means) or the supply pressure (in the case of pneumatically or hydraulically designed displacement means is lost), the magnets will rotate to the inactive state and the magnetic plate separator will move to the OFF state, even if there is a pile of steel plates present in front of the work surface.

### Brief description of the drawings

The invention will be explained in more detail below with reference to an example of embodiment of a magnetic plate separator according to the invention shown in the drawings, in which:
Fig. 1 shows an embodiment of the magnetic plate separator according to the invention arranged as a plate separator during the separating of plates;
Fig. 2 shows a detail of the magnet assembly of the plate separator in the active state;
Fig. 3 shows the magnet assembly in active state with the magnetic field visualized in it;
Fig. 4 shows the sheet separator shown in Fig. 1 in the inactive state;
Fig. 5 shows a detail of the magnet assembly of the plate separator in the inactive state; and
Fig. 6 shows the magnet assembly in the inactive state with the magnetic field visualized in it.

### Detailed description of the drawings

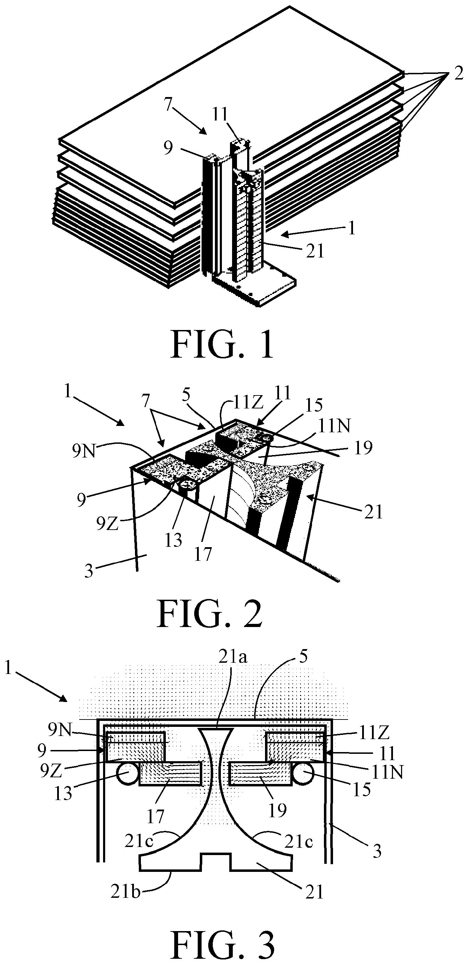

Fig. 1 shows an embodiment of the plate separator 1 according to the invention during the separating of plates 2. For the sake of clarity, the housing of the plate separator 1 is omitted here. This housing 3, see Figs. 2 and 3, is provided with an elongated work surface 5 which, during operation, is present next to the stack of plates and which is vertically oriented in longitudinal direction. The housing accommodates a magnet assembly 7 for separating the plates. This magnet assembly has two elongated permanent magnets 9 and 11 which are also vertically oriented and which are connected to rotatable shafts 13 and 15.

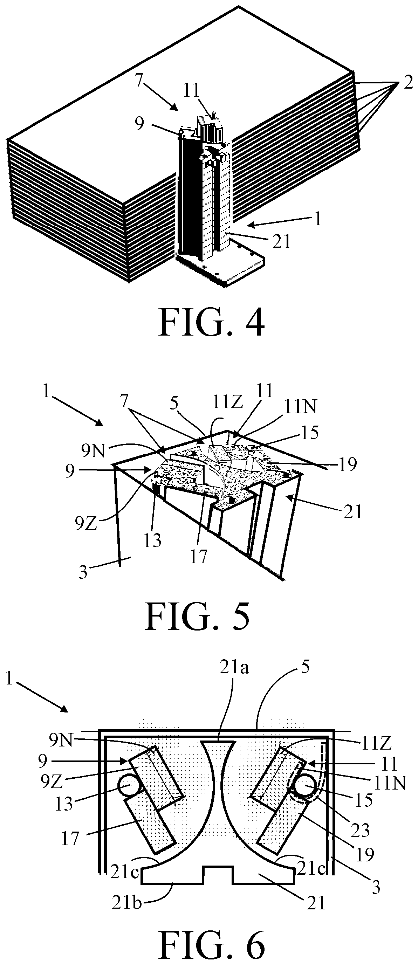

The plate separator 1 further includes displacement means for rotating the shafts in mutually opposite directions of rotation and thereby moving the magnet assembly between an active state near the work surface (the state shown in Figs. 2 and 3) and an inactive state turned away from the work surface (the state shown in Figs. 5 and 6).

In the active state, the first magnet 9 with the magnetic North pole 9N and the second magnet 11 with the magnetic South pole 11Z faces the work surface. The other poles 9Z and 11N of the magnets are magnetically connected to each other via magnetic conductors. These magnetic conductors close the magnetic circuit and thereby reduce the magnetic resistance of the magnetic circuit. Two of these magnetic conductors 17 and 19 are fixed against these poles 9Z and 11N and, viewed in cross-section, extend in a direction towards a further magnetic conductor 21.

The magnetic conductor 21 is not only present between the two permanent magnets, but also extends to the permanent magnets' side turned away from the work surface. This magnetic conductor 21 is formed by a vertically arranged solid cylinder of magnetic material. The magnetic conductor, see Fig. 3, has a cross-section with a first end face 21a facing the work surface 5, a second end face 21b turned away from the work surface and sides 21c extending between the end faces. These sides extend in this embodiment along a part of a circular arc, wherein the centres of these circular arcs coincide or substantially coincide with the axes of the shafts 13 and 15. The second end face 21b turned away from the work surface is larger than the first end face 21a facing the work surface.

In Fig. 4, the plate separator 1 is shown in an inactive state with magnets 9 and 11 turned away from the work surface. Here too the housing of the plate separator 1 is omitted for the sake of clarity. In this inactive state the North pole 9N of the first magnet 9 and the South pole 11Z of the second magnet 11 are facing each other, see Figs. 5 and 6. The other poles 9Z and 11N of the magnets are also in this state magnetically connected to each other via the magnetic conductors 17, 19 and 21.

Around each shaft 13, 15 may be present a wire spring 23 (only in Fig. 6 is shown a wire spring in broken lines for illustrative purposes) which exerts a force on the magnet and pushes the magnet to the inactive state.

Albeit in the foregoing the invention has been explained with reference to the drawings, it should be noted that the invention is by no means limited to the embodiment shown in the drawings. The invention also extends to all embodiments deviating from the embodiment shown in the drawings within the framework defined by the claims. For example, the magnets can also be horizontally oriented in case the plates are not stacked on top of each other but the stack has been turned through 90 degrees to a position in which the plates stand vertically against each other.

## Claims

1. Magnetic plate separator (1) for spacing the upper plates (2) of a stack of steel plates in vertical direction, comprising:
- a housing (3) provided with an elongated work surface (5) which, during operation, is present next to a stack of plates and is vertically oriented in longitudinal direction, as well as
- a magnet assembly (7) of at least two elongated permanent magnets (9, 11) which are movably present in the housing and are vertically oriented also in longitudinal direction during operation, and
- displacement means for displacing the magnet assembly between an active state near the work surface and an inactive state remote from the work surface,
**characterized in that** of the magnet assembly (7) a first magnet (9) is fixed to a first shaft (13) and a second magnet (11) to a second shaft (15), which shafts are rotatable in mutually opposite directions, where in the active state the first magnet (9) is facing the work surface (5) with the magnetic North Pole (9N) and the second magnet (11) is facing the work surface (5) with the magnetic South Pole (11Z) and the other poles (9Z, 11N) of the magnets are interconnected via at least one magnetic conductor (21), and where in the inactive state the North Pole (9N) of the first magnet and the South Pole (11Z) of the second magnet are facing each other and the other poles (9Z, 11N) of the magnets are magnetically connected to each other via the magnetic conductor (21),
**in that** the magnetic conductor (21) is arranged between the two permanent magnets (9, 11),
**in that** the magnetic conductor (21) is formed by a solid cylinder of magnetic material and, during operation, is also vertically oriented and has a cross-section that is provided with a first end face (21a) facing the work surface (5) and a second end face (21b) turned away from the work face and sides (21c) extending between the first and second end faces and extending along a part of a circular arc,
**in that** the second end face (21b) turned away from the work surface (5) is larger than the first end face (21a) facing the work surface,
and **in that** the centres of the circular arcs coincide or substantially coincide with the axes of the shafts (13, 15) on which the first and second permanent magnets (9, 11) are fixed.

2. Magnetic plate separator as claimed in claim 1, **characterized in that** the work surface (5) is elongated and is vertically oriented in longitudinal direction, and the permanent magnets (9, 11) are also elongated and are also vertically oriented in longitudinal direction.

3. Magnetic plate separator as claimed in claim 1 or 2, **characterized in that** the magnetic conductor (21) extends to the other poles (9Z, 11N) of the permanent magnets (9, 11) that are turned away from the work surface (5).

4. Magnetic plate separator as claimed in any one of the preceding claims, **characterized in that** further magnetic conductors (17, 19) are fixed to said other poles (9Z, 11N) of the permanent magnets (9, 11) which, viewed in cross-section, extend in a direction towards each other.

5. Magnetic plate separator as claimed in any one of the preceding claims, **characterized in that** the permanent magnets (9, 11) are each coupled to a spring (23) that exerts a force on the relevant magnet in the direction to the inactive state.

## Patentansprüche

1. Magnetischer Plattenseparator (1) zum beabstanden der oberen Platten (2) eines Stapels von Stahlplatten in vertikaler Richtung, umfassend:
- ein Gehäuse (3), das mit einer länglichen Arbeitsfläche (5) versehen ist, die im Betrieb neben einem Stapels von Platten vorhanden ist und in Längsrichtung vertikal ausgerichtet ist, sowie
- eine Magnetanordnung (7) aus mindestens zwei langgestreckten Permanentmagneten (9, 11), die beweglich im Gehäuse vorhanden sind und im Betrieb auch in Längsrichtung vertikal ausgerichtet sind, und
- Verschiebungsmittel zum Verschieben der Magnetanordnung zwischen einem aktiven Zustand nahe der Arbeitsfläche und einem inaktiven Zustand entfernt von der Arbeitsfläche,
**dadurch gekennzeichnet, dass** von der Magnetanordnung (7) ein erster Magnet (9) an einer ersten Welle (13) und ein zweiter Magnet (11) an einer zweiten Welle (15) befestigt ist, wobei die Wellen in zueinander entgegengesetzten Richtungen drehbar sind, wo im aktiven Zustand der erste Magnet (9) der Arbeitsfläche (5) mit dem magnetischen Nordpol (9N) und der zweite Magnet (11) der Arbeitsfläche (5) mit dem magnetischen Südpol (11Z) zugewandt ist und die anderen Pole (9Z, 11N) der Magnete über mindestens einen Magnetleiter (21) miteinander verbunden sind, und wobei im inaktiven Zustand der Nordpol (9N) des ersten Magneten und der Südpol (11Z) des zweiten Magneten einander zugewandt sind und die anderen Pole (9Z, 11N) der Magnete über den Magnetleiter (21) magnetisch miteinander verbunden sind,
dass der Magnetleiter (21) zwischen den beiden Permanentmagneten (9, 11) angeordnet ist,
dass der Magnetleiter (21) durch einen Vollzylinder aus magnetischem Material gebildet ist und im Betrieb ebenfalls vertikal ausgerichtet ist und einen Querschnitt aufweist, der mit einer der Arbeitsfläche (5) zugewandten ersten Stirnfläche (21a) versehen ist und eine zweite Endfläche (21b), die von der Arbeitsfläche abgewandt ist, und Seiten (21c), die sich zwischen der ersten und der zweiten Endfläche erstrecken und sich entlang eines Teils eines Kreisbogens erstrecken,
dass die der Arbeitsfläche (5) abgewandte zweite Stirnfläche (21b) größer ist als die der Arbeitsfläche zugewandte erste Stirnfläche (21a),
und dadurch, dass die Mittelpunkte der Kreisbögen mit den Achsen der Wellen (13, 15) zusammenfallen oder im Wesentlichen zusammenfallen, auf denen der erste und der zweite Permanentmagnet (9, 11) befestigt sind.

2. Magnetplattenseparator nach Anspruch 1, **dadurch gekennzeichnet, dass** die Arbeitsfläche (5) langgestreckt und in Längsrichtung vertikal ausgerichtet ist und die Permanentmagnete (9, 11) ebenfalls langgestreckt und ebenfalls in Längsrichtung vertikal ausgerichtet sind.

3. Magnetplattenseparator nach Anspruch 1 oder 2, **dadurch gekennzeichnet, dass** sich der Magnetleiter (21) bis zu den anderen, der Arbeitsfläche (5) abgewandten Polen (9Z, 11N) der Permanentmagnete (9, 11) erstreckt.

4. Magnetplattenabscheider nach einem der vorhergehenden Ansprüche, **dadurch gekennzeichnet, dass** an den anderen Polen (9Z, 11N) der Permanentmagnete (9, 11) weitere magnetische Leiter (17, 19) befestigt sind, die, in Querschnitt, sich in einer Richtung aufeinander zu erstrecken.

5. Magnetplattenseparator nach einem der vorhergehenden Ansprüche, **dadurch gekennzeichnet, dass** die Permanentmagnete (9, 11) jeweils mit einer Feder (23) gekoppelt sind, die auf den betreffenden Magneten eine Kraft in Richtung auf den inaktiven Zustand ausübt.

## Revendications

1. Séparateur magnétique à plaques (1) pour espacer les plaques supérieures (2) d'un empilement de plaques d'acier dans le sens vertical, comprenant:
- un boîtier (3) pourvu d'une surface de travail allongée (5) qui, pendant le fonctionnement, est présente à côté d'un empilement de plaques et est orientée verticalement dans le sens longitudinal, ainsi que
- un ensemble d'aimants (7) d'au moins deux aimants permanents allongés (9, 11) qui sont présents de manière mobile dans le boîtier et sont orientés verticalement également dans la direction longitudinale pendant le fonctionnement, et
- des moyens de déplacement pour déplacer l'ensemble d'aimants entre un état actif proche du plan de travail et un état inactif éloigné du plan de travail,
**caractérisé en ce que** de l'ensemble d'aimants (7), un premier aimant (9) est fixé à un premier arbre (13) et un deuxième aimant (11) à un deuxième arbre (15), lesquels arbres peuvent tourner dans des directions mutuellement opposées, où dans l'état actif, le premier aimant (9) fait face à la surface de travail (5) avec le pôle nord magnétique (9N) et le deuxième aimant (11) fait face à la surface de travail (5) avec le pôle sud magnétique (11Z) et les autres pôles (9Z, 11N) des aimants sont interconnectés via au moins un conducteur magnétique (21), et où à l'état inactif le pôle Nord (9N) du premier aimant et le pôle Sud (11Z) du second aimant se font face et les autres pôles (9Z, 11N) des aimants sont reliés magnétiquement l'un à l'autre par l'intermédiaire du conducteur magnétique (21),
**en ce que** le conducteur magnétique (21) est disposé entre les deux aimants permanents (9, 11),
**en ce que** le conducteur magnétique (21) est formé par un cylindre plein de matériau magnétique et, pendant le fonctionnement, est également orienté verticalement et a une section transversale qui est pourvue d'une première face d'extrémité (21a) faisant face à la surface de travail (5) et une deuxième face d'extrémité (21b) tournée à l'opposé de la face de travail et des côtés (21c) s'étendant entre les première et deuxième faces d'extrémité et s'étendant le long d'une partie d'un arc de cercle,
**en ce que** la deuxième face d'extrémité (21b) tournée à l'opposé du plan de travail (5) est plus grande que la première face d'extrémité (21a) tournée vers le plan de travail,
et **en ce que** les centres des arcs de cercle coïncident ou coïncident sensiblement avec les axes des arbres (13, 15) sur lesquels sont fixés les premier et second aimants permanents (9, 11).

2. Séparateur magnétiques à plaques selon la revendication 1, **caractérisé en ce que** la surface de travail (5) est allongée et est orientée verticalement dans la direction longitudinale, et les aimants permanents (9, 11) sont également allongés et sont également orientés verticalement dans la direction longitudinale.

3. Séparateur magnétique à plaques selon la revendication 1 ou 2, **caractérisé en ce que** le conducteur magnétique (21) s'étend jusqu'aux autres pôles (9Z, 11N) des aimants permanents (9, 11) qui sont détournés du plan de travail (5).

4. Séparateur magnétiques à plaques selon l'une quelconque des revendications précédentes, **caractérisé en ce que** d'autres conducteurs magnétiques (17, 19) sont fixés auxdits autres pôles (9Z, 11N) des aimants permanents (9, 11) qui, vus en section transversale, s'étendent dans une direction l'une vers l'autre.

5. Séparateur magnétiques à plaques selon l'une quelconque des revendications précédentes, **caractérisé en ce que** les aimants permanents (9, 11) sont couplés chacun à un ressort (23) qui exerce une force sur l'aimant concerné dans le sens de l'état inactif.
